# EUROPEAN PATENT SPECIFICATION

(11) **EP 4 198 303 B1**
(45) Date of publication and mention of the grant of the patent: **25.06.2025**
(21) Application number: 21857243.6
(22) Date of filing: 13.05.2021
(51) Int. Cl.: F03D 17/00, F03D 13/20, F03D 80/00, G01S 5/06, F03D 7/02

(54) **MONITORING DEVICE AND METHOD FOR CLEARANCE OF BLADES OF WIND TURBINE GENERATOR SET, AND WIND TURBINE GENERATOR SET**
ÜBERWACHUNGSVORRICHTUNG UND VERFAHREN FÜR DEN ABSTAND VON SCHAUFELN EINES WINDTURBINENGENERATORSATZES UND WINDTURBINENGENERATORSATZ
DISPOSITIF DE SURVEILLANCE ET PROCÉDÉ DE JEU DE PALES D'UN ENSEMBLE GÉNÉRATEUR ÉOLIEN, ET ENSEMBLE GÉNÉRATEUR ÉOLIEN

(30) Priority: 17.08.2020 CN 202010827013
(43) Date of publication of application: 21.06.2023
(73) Proprietor: SHANGHAI ELECTRIC WIND POWER GROUP CO., LTD, Shanghai 200241 (CN)
(72) Inventor: LI, Qiang, Shanghai 200241 (CN); ZHANG, Liming, Shanghai 200241 (CN)
(74) Representative: Dai, Simin
(86) International application number: PCT/CN2021/093690
(87) International publication number: WO 2022/037142

(56) References cited:
- CN-A- 109 812 390
- CN-A- 110 005 581
- CN-A- 111 456 899
- CN-A- 111 963 385
- CN-U- 207 111 315
- CN-U- 210 003 452
- CN-U- 210 003 452
- US-A1- 2004 057 828
- US-A1- 2010 021 298
- US-A1- 2012 063 895
- US-A1- 2015 322 925
- US-A1- 2018 171 984

## Description

### TECHNICAL FIELD

Embodiments of the present invention relate to the field of wind power technology, and in particular to an apparatus and method of monitoring a clearance of a blade of a wind turbine, and a wind turbine.

### BACKGROUND

With the gradual depletion of energy sources such as coal and oil, people are paying more and more attention to the use of renewable energy sources. Wind energy, as a kind of clean and renewable energy source, is getting more and more attention from all over the world. For coastal islands, grassland pastoral areas, mountainous areas and plateau areas where water and fuel are scarce and transportation is poor, the use of wind power generation according to local conditions is very suitable and promising. Wind power generation refers to conversion of kinetic energy of wind into electrical energy by use of wind turbines.

During the operation of a wind turbine, due to damage to blades, sensor failures, control system failures, or encounter of extreme wind conditions, the vibration of the whole wind turbine may become unstable, and a clearance distance between a blade tip and a tower may decrease sharply, which eventually causes the blade to collide with the tower, resulting in fracture of the blade or the tower. This phenomenon is called "tower sweeping".

At present, a clearance of the blade is monitored mainly in the following manners. Attitude of the blade tip and the clearance distance are calculated based on reflected waves after collision of emitted electromagnetic or mechanical waves with a detected object, or an orientation of a deformed blade tip is detected by image recognition and then the clearance distance is obtained by cumbersome data post-processing or algorithms.

However, when wind turbine blades are subjected to uncertain loads, direction and attitude of the blade tip after deformation are uncertain, which may be waving, swinging or twisting. Using the above technical manners to detect the orientation of the blade tip and then process the data is cumbersome and complicated, and has an undesirable effect.

In addition, it is inconvenient to install and maintain a detection device on the tower. Moreover, measurement results of some laser devices are easily affected by dust, smog, and other environments. A prior art example can be found in US 2010 021 298 A1.

### SUMMARY

An objective of embodiments of the present invention is to provide an apparatus and method of monitoring a clearance of a blade of a wind turbine, and a wind turbine, which can simply, conveniently and effectively monitor the clearance between the blade and a tower to prevent tower sweeping.

In an aspect of the embodiments of the present invention, there is provided an apparatus for monitoring a clearance of a blade of a wind turbine. The apparatus includes: a signal transmitter provided on each blade of the wind turbine; a first signal receiver and a second signal receiver provided on a nacelle of the wind turbine; and a control system communicatively connected with the first signal receiver and the second signal receiver. The signal transmitter is installed at the top of a blade tip of the blade. The wind turbine has a safety clearance plane, the safety clearance plane being a plane which is located at a safety clearance position between the blade tip and a tower and is parallel to an axis of the tower, where the first signal receiver and the second signal receiver are arranged symmetrically with respect to the safety clearance plane. The control system determines whether there is a risk of tower sweeping, based on a sequence in which the first signal receiver and the second signal receiver receive a signal transmitted by the signal transmitter.

In another aspect of the embodiments of the present invention, there is provided a method of monitoring a clearance of a blade of a wind turbine. The method includes: transmitting, by a signal transmitter, a signal, in response to a blade of the wind turbine approaching a tower from above in a predetermined angle range, where the signal transmitter is installed at the top of a blade tip of each blade of the wind turbine; receiving, by a first signal receiver and a second signal receiver installed on a nacelle of the wind turbine, the signal transmitted by the signal transmitter, respectively, where the first signal receiver and the second signal receiver are arranged symmetrically with respect to a safety clearance plane of the wind turbine, the safety clearance plane being a plane which is located at a safety clearance position between the blade tip and the tower and is parallel to an axis of the tower; and determining, by a control system communicatively connected with the first signal receiver and the second signal receiver, whether there is a risk of tower sweeping, based on a sequence in which the first signal receiver and the second signal receiver receive the signal transmitted by the signal transmitter.

In still another aspect of the embodiments of the present invention, there is provided a wind turbine, including: a tower; a nacelle installed at the top of the tower; a hub installed at an end of the nacelle; and a plurality of blades installed on the hub. The wind turbine further includes the apparatus for monitoring the clearance of the blade of the wind turbine as described above.

In a particular embodiment, the first signal receiver is disposed close to the blade; the second signal receiver is disposed close to the tower; in response to the first signal receiver receiving the signal transmitted by the signal transmitter earlier than the second signal receiver, the control system determines that the blade is located outside of the safety clearance plane, and the tower is safe; and in response to the first signal receiver and the second signal receiver receiving the signal transmitted by the signal transmitter at the same time, or the first signal receiver receiving the signal transmitted by the signal transmitter later than the second signal receiver, the control system determines that the blade is located on or inside of the safety clearance plane, and there is the risk of tower sweeping.

In a particular embodiment, when it is determined that there is the risk of tower sweeping, the control system controls the wind turbine to perform a shutdown operation.

In a particular embodiment, the first signal receiver and the second signal receiver are installed at a bottom of the nacelle.

In a particular embodiment, the first signal receiver and the second signal receiver are located on a projection line of an axis of a drive train of the wind turbine on a bottom surface of the nacelle of the wind turbine.

In a particular embodiment, the first signal receiver and the second signal receiver are installed on a side of the nacelle.

In a particular embodiment, a signal receiving range of the first signal receiver and the second signal receiver is a predetermined angle range where the blade rotates close to the tower from above.

In a particular embodiment, the signal transmitter is powered by a solar cell.

With the apparatus for monitoring the clearance of the blade of the wind turbine according to the embodiments of the present invention, the clearance between the blade and the tower can be monitored effectively to prevent tower sweeping, without being affected by orientation and attitude of deformation of the blade tip, and without the need for a large amount of cumbersome data processing. The apparatus is easy to install and maintain, has an efficient and reliable performance, and is not easily affected by the environment.

Moreover, the apparatus for monitoring the clearance of the blade of the wind turbine according to the embodiments of the present invention is simple in structural design and is low in cost, and can be widely promoted.

### BRIEF DESCRIPTION OF THE DRAWINGS

FIG. 1 is a schematic side view illustrating a wind turbine according to an embodiment of the present invention.
FIG. 2 is a schematic front view illustrating a wind turbine according to an embodiment of the present invention in operation.
FIG. 3 is a flowchart illustrating a method of monitoring a clearance of a blade of a wind turbine according to an embodiment of the present invention.

### DETAILED DESCRIPTION

Exemplary embodiments will be described herein in detail, examples of which are illustrated in the accompanying drawings. When the following description refers to the accompanying drawings, the same numerals in different drawings indicate the same or similar elements unless otherwise indicated. Embodiments described in the following exemplary embodiments do not represent all embodiments consistent with the present invention. Rather, they are merely examples of apparatuses consistent with some aspects of the present invention as detailed in the appended claims.

Terms used in the embodiments of the present invention are merely for the purpose of describing particular embodiments, and are not intended to limit the present invention. Unless otherwise defined, technical terms or scientific terms used in the embodiments of the present invention shall have the ordinary meaning as understood by those ordinary skilled in the art to which the present invention belongs. Words "first", "second" and the like, as used in the description and claims of the present invention, do not indicate any order, number or importance, but are used only to distinguish between different components. Likewise, words "one" or "a" and the like do not indicate a limitation in number, but indicate the presence of at least one. The term "a plurality of" or "several" indicates two or more. Unless otherwise indicated, words "front", "rear", "lower" and/or "upper" and the like are used for illustrative purposes only, and are not limited to a position or a spatial orientation. Words such as "include" or "comprise" are intended to mean that an element or object that appears before "include" or "comprise" covers elements or objects listed after "include" or "comprise" and their equivalents, and does not exclude other elements or objects. Words "connect" or "couple" and the like are not limited to physical or mechanical connections, but may include electrical connections, whether direct or indirect. Singular forms of "a", "said" and "the" as used in the description and appended claims of the present invention are also intended to include plural forms, unless the context clearly indicates otherwise. It should also be understood that the term "and/or" as used herein refers to and includes any or all possible combinations of one or more of the associated listed items.

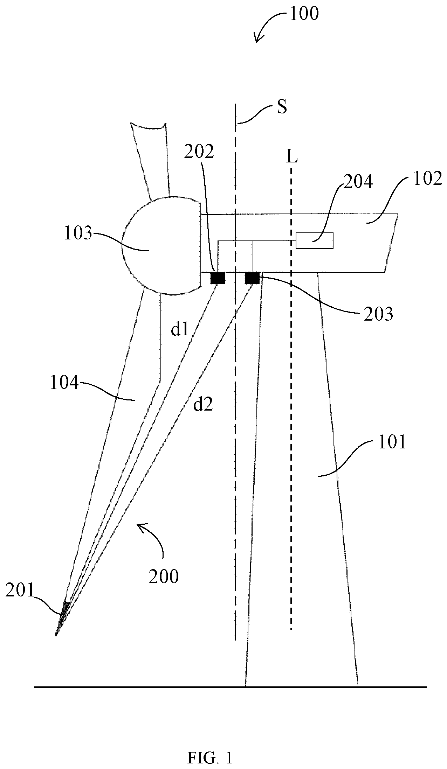

FIG. 1 illustrates a schematic side view of a wind turbine 100 according to an embodiment of the present invention. As shown in FIG. 1, the wind turbine 100 includes: a tower 101; a nacelle 102 installed at the top of the tower 101; a hub 103 installed at an end of the nacelle 102; and a plurality of blades 104 installed on the hub 103. The wind turbine 100 according to the embodiment of the present invention further includes an apparatus 200 for monitoring a clearance of the blade of the wind turbine. The apparatus 200 is configured to monitor a clearance of the blade of the wind turbine 100.

The apparatus 200 for monitoring the clearance of the blade of the wind turbine according to the embodiment of the present invention includes a signal transmitter 201, a first signal receiver 202, a second signal receiver 203, and a control system 204. The signal transmitter 201 is provided on each of the blades 104 of the wind turbine 100, and the signal transmitter 201 is installed at the top of a blade tip of the blade 104. Signals transmitted by the signal transmitter 201 may include, but are not limited to, electromagnetic waves, sound waves or other signal waves, for example. Power for the signal transmitter 201 is provided by a battery or other power sources, for example, the signal transmitter 201 is powered by a solar cell, thereby saving energy.

The first signal receiver 202 and the second signal receiver 203 are provided on the nacelle 102 of the wind turbine 100. The first signal receiver 202 and the second signal receiver 203 may be installed on the nacelle 102, for example, by welding, bonding, screwing, riveting, snap-fitting, magnetic attraction, or other installation methods. The wind turbine 100 has a safety clearance plane S, and the safety clearance plane S is a plane which is located at a safety clearance position between the blade tip and the tower 101 and is parallel to an axis L of the tower 101, where the first signal receiver 202 and the second signal receiver 203 are arranged symmetrically with respect to the safety clearance plane S.

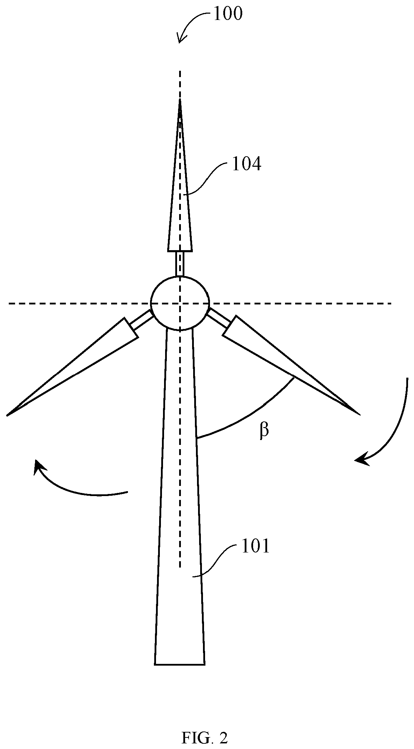

FIG. 2 illustrates a schematic front view of the wind turbine 100 according to an embodiment of the present invention in operation. As shown in FIG. 2, a signal receiving range of the first signal receiver 202 and the second signal receiver 203 is set to be a predetermined angle range β where the blade 104 rotates close to the tower 101 from above. The first signal receiver 202 and the second signal receiver 203 can receive the signals transmitted by the signal transmitter 201 when the blade 104 rotates close to the tower 101 from above in the predetermined angle range β. As the blade 104 continues to rotate upwards away from the tower 101 from the bottom, for example, as the blade 104 rotates upwards from the bottom shown in FIG. 2 to the left side shown in FIG. 2, the first signal receiver 202 and the second signal receiver 203 can no longer receive the signals.

The predetermined angle range β where the blade 104 rotates close to the tower 101 from above can be determined based on the type of the wind turbine 100. For example, in an embodiment, the predetermined angle range β where the blade 104 rotates close to the tower 101 from above can be set to about 50°-60°.

In some embodiments, the first signal receiver 202 and the second signal receiver 203 are installed at the bottom of the nacelle 102. For example, the first signal receiver 202 and the second signal receiver 203 are located on a projection line of an axis of a drive train of the wind turbine 100 on a bottom surface of the nacelle 102 of the wind turbine 100.

In other embodiments, the first signal receiver 202 and the second signal receiver 203 can be installed on a side of the nacelle 102. In this way, maintenance of the first signal receiver 202 and the second signal receiver 203 can be facilitated.

The control system 204 is communicatively connected with the first signal receiver 202 and the second signal receiver 203, and the control system 204 can determine whether there is a risk of tower sweeping, based on a sequence in which the first signal receiver 202 and the second signal receiver 203 receive a signal transmitted by the signal transmitter 201.

Referring to FIG. 1, the first signal receiver 202 is disposed close to the blade 104, and the second signal receiver 203 is disposed close to the tower 101. If the first signal receiver 202 close to the blade 104 receives the signal transmitted by the signal transmitter 201 earlier than the second signal receiver 203 close to the tower 101, it indicates that a distance d1 from the signal transmitter 201 to the first signal receiver 202 is less than a distance d2 from the signal transmitter 201 to the second signal receiver 203. In this case, the control system 204 can determine that the blade 104 is located outside of the safety clearance plane S, that is, the blade 104 is farther away from the tower 101 than the safety clearance plane S, and the tower 101 is safe.

If the first signal receiver 202 and the second signal receiver 203 receive the signal transmitted by the signal transmitter 201 at the same time, or the first signal receiver 202 receives the signal transmitted by the signal transmitter 201 later than the second signal receiver 203, it indicates that the distance d1 from the signal transmitter 201 to the first signal receiver 202 is equal to or greater than the distance d2 from the signal transmitter 201 to the second signal receiver 203. In this case, the control system 204 can determine that the blade 104 is located on or inside of the safety clearance plane S, that is, the blade 104 is on the safety clearance plane S or the blade 104 is closer to the tower 101 than the safety clearance plane S, and there is a risk of tower sweeping.

In some embodiments, when it is determined that there is a risk of tower sweeping, the control system 204 can further control the wind turbine 100 to perform a shutdown operation so as to prevent tower sweeping, and the blades 104 stop rotating.

With the apparatus 200 for monitoring the clearance of the blade of the wind turbine according to the embodiments of the present invention, the clearance between the blade 104 and the tower 101 can be monitored effectively to prevent tower sweeping, without being affected by orientation and attitude of deformation of the blade tip, and without the need for a large amount of cumbersome data processing. The apparatus is easy to install and maintain, has an efficient and reliable performance, and is not easily affected by the environment.

Moreover, the apparatus 200 for monitoring the clearance of the blade of the wind turbine according to the embodiments of the present invention is simple in structural design and is low in cost, and can be widely promoted.

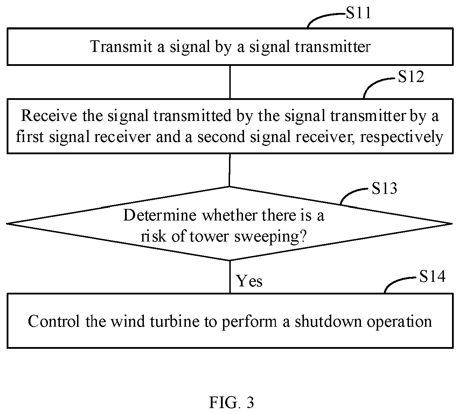

Embodiments of the present invention also provide a method of monitoring a clearance of a blade of a wind turbine. FIG. 3 illustrates a flowchart of a method of monitoring a clearance of a blade of a wind turbine according to an embodiment of the present invention. As shown in FIG. 3, the method of monitoring the clearance of the blade of the wind turbine according to the embodiment of the present invention includes steps S11 to S13.

At step S11, a signal is transmitted by a signal transmitter 201, in response to the blade 104 of the wind turbine 100 approaching a tower 101 from above in a predetermined angle range β, where the signal transmitter 201 is installed at the top of a blade tip of each blade 104 of the wind turbine 100.

At step S12, the signal transmitted by the signal transmitter 201 is respectively received by a first signal receiver 202 and a second signal receiver 203 installed on a nacelle 102 of the wind turbine 100, where the first signal receiver 202 and the second signal receiver 203 are arranged symmetrically with respect to a safety clearance plane S of the wind turbine 100, the safety clearance plane S being a plane which is located at a safety clearance position between the blade tip and the tower 101 and is parallel to an axis L of the tower 101.

At step S13, it is determined whether there is a risk of tower sweeping, based on a sequence in which the first signal receiver 202 and the second signal receiver 203 receive the signal transmitted by the signal transmitter 201.

The first signal receiver 202 is disposed close to the blade 104, and the second signal receiver 203 is disposed close to the tower 101. If the first signal receiver 202 receives the signal transmitted by the signal transmitter 201 earlier than the second signal receiver 203, it is determined that the blade 104 is located outside of the safety clearance plane S, and the tower 101 is safe. If the first signal receiver 202 and the second signal receiver 203 receive the signal transmitted by the signal transmitter 201 at the same time, or the first signal receiver 202 receives the signal transmitted by the signal transmitter 201 later than the second signal receiver 203, it is determined that the blade 104 is located on or inside of the safety clearance plane S, and there is a risk of tower sweeping.

In some embodiments, the method of monitoring the clearance of the blade of the wind turbine according to the embodiment of the present invention further includes step S14. At step S14, when it is determined that there is a risk of tower sweeping, the wind turbine 100 is controlled to perform a shutdown operation so as to prevent tower sweeping.

The method of monitoring the clearance of the blade of the wind turbine according to the embodiment of the present invention has beneficial technical effects similar to those of the apparatus 200 for monitoring the clearance of the blade of the wind turbine as described above, which will not be repeated herein.

The apparatus and method of monitoring the clearance of the blade of the wind turbine, and the wind turbine according to the embodiments of the present invention have been described above in detail. Herein, the apparatus and method of monitoring the clearance of the blade of the wind turbine, and the wind turbine according to the embodiments of the present invention have been set forth in specific examples. The above description of the embodiments is only intended to help understand core concepts of the present invention, and is not intended to limit the present invention. It should be noted that, for those ordinary skilled in the art, without departing from the principle of the present invention, some improvements and modifications can be made to the present invention, all of which shall also fall within the scope of protection of the appended claims of the present invention.

## Claims

1. An apparatus (200) for monitoring a clearance of a blade of a wind turbine comprising:
a signal transmitter (201) provided on each blade (104) of the wind turbine (100), the signal transmitter (201) being installed at a top of a blade tip of the blade (104);
a first signal receiver (202) and a second signal receiver (203) provided on a nacelle (102) of the wind turbine (100), the wind turbine (100) having a safety clearance plane (S), and the safety clearance plane (S) being a plane which is located at a safety clearance position between the blade tip and a tower (101) of the wind turbine (100) and is parallel to an axis (L) of the tower (101);
and
a control system (204) communicatively connected with the first signal receiver (202) and the second signal receiver (203), the control system (204) determining whether there is a risk of tower sweeping, based on a sequence in which the first signal receiver (202) and the second signal receiver (203) receive a signal transmitted by the signal transmitter (201), **characterized in that** the first signal receiver (202) and the second signal receiver (203) are arranged symmetrically with respect to the safety clearance plane (S).

2. The apparatus according to claim 1, wherein
the first signal receiver (202) is disposed close to the blade (104);
the second signal receiver (203) is disposed close to the tower (101);
in response to the first signal receiver (202) receiving the signal transmitted by the signal transmitter (201) earlier than the second signal receiver (203), the control system (204) determines that the blade (104) is located outside of the safety clearance plane (S), and the tower (101) is safe; and
in response to the first signal receiver (202) and the second signal receiver (203) receiving the signal transmitted by the signal transmitter (201) at the same time, or the first signal receiver (202) receiving the signal transmitted by the signal transmitter (201) later than the second signal receiver (203), the control system (204) determines that the blade (104) is located on or inside of the safety clearance plane (S), and there is the risk of tower sweeping.

3. The apparatus according to claim 1 or 2, wherein when it is determined that there is the risk of tower sweeping, the control system (204) controls the wind turbine (100) to perform a shutdown operation.

4. The apparatus according to any one of claims 1-3, wherein
the first signal receiver (202) and the second signal receiver (203) are installed at a bottom of the nacelle (102).

5. The apparatus according to claim 4, wherein
the first signal receiver (202) and the second signal receiver (203) are located on a projection line of an axis of a drive train of the wind turbine (100) on a bottom surface of the nacelle (102) of the wind turbine (100).

6. The apparatus according to any one of claims 1-3, wherein
the first signal receiver (202) and the second signal receiver (203) are installed on a side of the nacelle (102).

7. The apparatus according to any one of claims 1-6, wherein
a signal receiving range of the first signal receiver (202) and the second signal receiver (203) is a predetermined angle range (β) where the blade (104) rotates close to the tower (101) from above.

8. The apparatus according to any one of claims 1-7, wherein the signal transmitter (201) is powered by a solar cell.

9. A method of monitoring a clearance of a blade of a wind turbine, comprising the steps of:
transmitting (S11), by a signal transmitter, a signal in response to a blade of the wind turbine approaching a tower from above and being in a predetermined angle range, wherein the signal transmitter is installed at a top of a blade tip of each blade of the wind turbine;
receiving (S12), by a first signal receiver and a second signal receiver installed on a nacelle of the wind turbine, the signal transmitted by the signal transmitter, respectively, wherein the first signal receiver and the second signal receiver are arranged symmetrically with respect to a safety clearance plane of the wind turbine, the safety clearance plane being a plane which is located at a safety clearance position between the blade tip and the tower and is parallel to an axis of the tower; and
determining (S13), by a control system communicatively connected with the first signal receiver and the second signal receiver, whether there is a risk of tower sweeping, based on a sequence in which the first signal receiver and the second signal receiver receive the signal transmitted by the signal transmitter.

10. The method according to claim 9, wherein
the first signal receiver is disposed close to the blade;
the second signal receiver is disposed close to the tower;
in response to the first signal receiver receiving the signal transmitted by the signal transmitter earlier than the second signal receiver, it is determined that the blade is located outside of the safety clearance plane, and the tower is safe; and
in response to the first signal receiver and the second signal receiver receiving the signal transmitted by the signal transmitter at the same time, or the first signal receiver receiving the signal transmitted by the signal transmitter later than the second signal receiver, it is determined that the blade is located on or inside of the safety clearance plane, and there is the risk of tower sweeping.

11. The method according to claim 9 or 10, further comprising:
when it is determined that there is the risk of tower sweeping, controlling (S14) the wind turbine to perform a shutdown operation.

12. A wind turbine (100), comprising: a tower (101); a nacelle (102) installed at a top of the tower (101); a hub (103) installed at an end of the nacelle (102); and a plurality of blades (104) installed on the hub (103),
**characterized in that**, the wind turbine (100) further comprises the apparatus (200) for monitoring the clearance of the blade of the wind turbine according to any one of claims 1-8.

## Patentansprüche

1. Vorrichtung (200) zur Überwachung eines Abstands einer Schaufel einer Windturbine, umfassend:
einen Signalgeber (201), der an jeder Schaufel (104) der Windturbine (100) vorgesehen ist, wobei der Signalgeber (201) an der Oberseite der Schaufelspitze der Schaufel (104) installiert ist;
einen ersten Signalempfänger (202) und einen zweiten Signalempfänger (203), die an einer Gondel (102) der Windturbine (100) vorgesehen sind, wobei die Windturbine (100) eine Sicherheitsabstandsebene (S) aufweist, und wobei die Sicherheitsabstandsebene (S) eine Ebene ist, die sich an einer Sicherheitsabstandsposition zwischen der Schaufelspitze und einem Turm (101) der Windturbine (100) befindet und parallel zu einer Achse (L) des Turms (101) verläuft; und
ein Steuersystem (204), das mit dem ersten Signalempfänger (202) und dem zweiten Signalempfänger (203) kommuniziert, wobei das Steuersystem (204) bestimmt, ob ein Risiko eines Turmanstreifens besteht, basierend auf der Reihenfolge, in der der erste Signalempfänger (202) und der zweite Signalempfänger (203) ein vom Signalgeber (201) übertragenes Signal empfangen,
**dadurch gekennzeichnet, dass** der erste Signalempfänger (202) und der zweite Signalempfänger (203) symmetrisch zur Sicherheitsabstandsebene (S) angeordnet sind.

2. Vorrichtung nach Anspruch 1, wobei:
- der erste Signalempfänger (202) nahe der Schaufel (104) angeordnet ist;
- der zweite Signalempfänger (203) nahe dem Turm (101) angeordnet ist;
- als Reaktion darauf, dass der erste Signalempfänger (202) das vom Signalgeber (201) übertragene Signal früher als der zweite Signalempfänger (203) empfängt, bestimmt das Steuersystem (204), dass sich die Schaufel (104) außerhalb der Sicherheitsabstandsebene (S) befindet und der Turm (101) sicher ist; und
- als Reaktion darauf, dass der erste Signalempfänger (202) und der zweite Signalempfänger (203) das vom Signalgeber (201) übertragene Signal gleichzeitig empfangen oder der erste Signalempfänger (202) das Signal später als der zweite Signalempfänger (203) empfängt, bestimmt das Steuersystem (204), dass sich die Schaufel (104) auf oder innerhalb der Sicherheitsabstandsebene (S) befindet und ein Risiko des Turmanstreifens besteht.

3. Vorrichtung nach Anspruch 1 oder 2, wobei das Steuersystem (204), wenn bestimmt wird, dass ein Risiko des Turmanstreifens besteht, die Windturbine (100) steuert, um einen Abschaltvorgang durchzuführen.

4. Vorrichtung nach einem der Ansprüche 1 bis 3, wobei der erste Signalempfänger (202) und der zweite Signalempfänger (203) an der Unterseite der Gondel (102) installiert sind.

5. Vorrichtung nach Anspruch 4, wobei der erste Signalempfänger (202) und der zweite Signalempfänger (203) auf einer Projektionslinie einer Achse eines Antriebsstrangs der Windturbine (100) auf einer Unterseite der Gondel (102) der Windturbine (100) angeordnet sind.

6. Vorrichtung nach einem der Ansprüche 1 bis 3, wobei der erste Signalempfänger (202) und der zweite Signalempfänger (203) an einer Seite der Gondel (102) installiert sind.

7. Vorrichtung nach einem der Ansprüche 1 bis 6, wobei ein Signalempfangsbereich des ersten Signalempfängers (202) und des zweiten Signalempfängers (203) ein vorbestimmter Winkelbereich (β) ist, in dem sich die Schaufel (104) dem Turm (101) von oben nähert.

8. Vorrichtung nach einem der Ansprüche 1 bis 7, wobei der Signalgeber (201) durch eine Solarzelle betrieben wird.

9. Verfahren zur Überwachung eines Abstands einer Schaufel einer Windturbine, umfassend die Schritte:
- Übertragen (S11) eines Signals durch einen Signalgeber, wenn sich eine Schaufel der Windturbine dem Turm von oben nähert und sich in einem vorbestimmten Winkelbereich befindet, wobei der Signalgeber an der Oberseite jeder Schaufelspitze der Windturbine installiert ist;
- Empfangen (S12) des vom Signalgeber übertragenen Signals durch einen ersten Signalempfänger und einen zweiten Signalempfänger, die an einer Gondel der Windturbine installiert sind, wobei der erste und der zweite Signalempfänger symmetrisch zu einer Sicherheitsabstandsebene der Windturbine angeordnet sind, wobei die Sicherheitsabstandsebene eine Ebene ist, die sich an einer Sicherheitsabstandsposition zwischen der Schaufelspitze und dem Turm befindet und parallel zur Achse des Turms verläuft; und
- Bestimmen (S13) durch ein Steuersystem, das mit dem ersten und zweiten Signalempfänger kommuniziert, ob ein Risiko des Turmanstreifens besteht, basierend auf der Reihenfolge, in der der erste Signalempfänger und der zweite Signalempfänger das vom Signalgeber übertragenes Signal empfangen.

10. Verfahren nach Anspruch 9, wobei:
- der erste Signalempfänger nahe der Schaufel angeordnet ist;
- der zweite Signalempfänger nahe dem Turm angeordnet ist;
- als Reaktion darauf, dass der erste Signalempfänger das Signal früher empfängt als der zweite, wird bestimmt, dass sich die Schaufel außerhalb der Sicherheitsabstandsebene befindet und der Turm sicher ist; und
- als Reaktion darauf, dass der erste Signalempfänger (202) und der zweite Signalempfänger (203) das vom Signalgeber (201) übertragene Signal gleichzeitig empfangen oder der erste Signalempfänger das Signal später als der zweite Signalempfänger (203) empfängt, bestimmt das Steuersystem, wird bestimmt, dass sich die Schaufel auf oder innerhalb der Sicherheitsabstandsebene befindet und ein Risiko des Turmanstreifens besteht.

11. Verfahren nach Anspruch 9 oder 10, umfassend außerdem:
Wenn bestimmt wird, dass ein Risiko des Turmanstreifens besteht, Steuern (S14) der Windturbine zur Durchführung eines Abschaltvorgangs.

12. Windturbine (100), umfassend: einen Turm (101); eine Gondel (102), die oben auf dem Turm (101) installiert ist; eine Nabe (103), die an einem Ende der Gondel (102) installiert ist; und mehrere Schaufeln (104), die an der Nabe (103) installiert sind,
**dadurch gekennzeichnet, dass** die Windturbine (100) ferner die Vorrichtung (200) zur Überwachung des Abstands der Schaufel gemäß einem der Ansprüche 1 bis 8 umfasst.

## Revendications

1. Un appareil (200) pour surveiller un espacement d'une pale d'une éolienne, comprenant :
un émetteur de signal (201) disposé sur chaque pale (104) de l'éolienne (100), l'émetteur de signal (201) étant installé à l'extrémité de la pale (104) ;
un premier récepteur de signal (202) et un second récepteur de signal (203) disposés sur une nacelle (102) de l'éolienne (100), l'éolienne (100) ayant un plan de sécurité (S), le plan de sécurité (S) étant un plan situé à une position de sécurité entre l'extrémité de la pale et une tour (101) de l'éolienne (100), et étant parallèle à un axe (L) de la tour (101) ; et
un système de commande (204) connecté en communication avec le premier récepteur de signal (202) et le second récepteur de signal (203), le système de commande (204) déterminant s'il existe un risque de balayage de la tour, en fonction de la séquence dans laquelle le premier récepteur de signal (202) et le second récepteur de signal (203) reçoivent un signal transmis par l'émetteur de signal (201),
**caractérisé en ce que** le premier récepteur de signal (202) et le second récepteur de signal (203) sont disposés symétriquement par rapport au plan de sécurité (S).

2. L'appareil selon la revendication 1, dans lequel :
le premier récepteur de signal (202) est disposé près de la pale (104) ;
le second récepteur de signal (203) est disposé près de la tour (101) ;
en réponse à la réception, par le premier récepteur de signal (202), du signal transmis par l'émetteur de signal (201) plus tôt que le second récepteur de signal (203), le système de commande (204) détermine que la pale (104) est située en dehors du plan de sécurité (S), et que la tour (101) est en sécurité ; et
en réponse à la réception, par le premier récepteur de signal (202) et le second récepteur de signal (203), du signal transmis par l'émetteur de signal (201) au même moment, ou à une réception par le premier récepteur de signal (202) plus tardive que par le second récepteur de signal (203), le système de commande (204) détermine que la pale (104) est située sur ou à l'intérieur du plan de sécurité (S), et qu'il existe un risque de balayage de la tour.

3. L'appareil selon la revendication 1 ou 2, dans lequel, lorsqu'il est déterminé qu'il existe un risque de balayage de la tour, le système de commande (204) commande à l'éolienne (100) d'effectuer une opération d'arrêt.

4. L'appareil selon l'une quelconque des revendications 1 à 3, dans lequel le premier récepteur de signal (202) et le second récepteur de signal (203) sont installés en bas de la nacelle (102).

5. L'appareil selon la revendication 4, dans lequel le premier récepteur de signal (202) et le second récepteur de signal (203) sont situés sur une ligne de projection d'un axe d'un train d'entraînement de l'éolienne (100) sur une surface inférieure de la nacelle (102) de l'éolienne (100).

6. L'appareil selon l'une quelconque des revendications 1 à 3, dans lequel le premier récepteur de signal (202) et le second récepteur de signal (203) sont installés sur un côté de la nacelle (102).

7. L'appareil selon l'une quelconque des revendications 1 à 6, dans lequel une plage de réception de signal du premier récepteur de signal (202) et du second récepteur de signal (203) est une plage angulaire prédéfinie (β) dans laquelle la pale (104) tourne à proximité de la tour (101) depuis le dessus.

8. L'appareil selon l'une quelconque des revendications 1 à 7, dans lequel l'émetteur de signal (201) est alimenté par une cellule solaire.

9. Un procédé de surveillance d'un espacement d'une pale d'une éolienne, comprenant les étapes suivantes :
transmission (S11), par un émetteur de signal, d'un signal en réponse à l'approche d'une pale de l'éolienne vers une tour par le haut et à sa présence dans une plage angulaire prédéfinie, l'émetteur de signal étant installé à l'extrémité de chaque pale de l'éolienne ;
réception (S12), par un premier récepteur de signal et un second récepteur de signal installés sur une nacelle de l'éolienne, respectivement, du signal transmis par l'émetteur de signal, les premier et second récepteurs étant disposés symétriquement par rapport à un plan de sécurité de l'éolienne, le plan de sécurité étant un plan situé à une position d'espacement de sécurité entre l'extrémité de la pale et la tour et étant parallèle à un axe de la tour ; et
détermination (S13), par un système de commande connecté en communication avec les premier et second récepteurs de signal, de l'existence ou non d'un risque de balayage de la tour, en fonction d'une séquence dans laquelle le premier récepteur de signal et le deuxième récepteur de signal reçoivent le signal transmis par l'émetteur de signal.

10. Le procédé selon la revendication 9, dans lequel :
le premier récepteur de signal est disposé près de la pale ;
le second récepteur de signal est disposé près de la tour ;
en réponse à la réception, par le premier récepteur de signal, du signal transmis par l'émetteur de signal plus tôt que par le second récepteur, il est déterminé que la pale est située en dehors du plan d'espacement de sécurité, et que la tour est en sécurité ; et
en réponse à la réception simultanée par le premier récepteur de signal et le second récepteur de signal, ou à une réception plus tardive par le premier récepteur que par le second récepteur de signal, il est déterminé que la pale est située sur ou à l'intérieur du plan d'espacement de sécurité, et qu'il existe un risque de balayage de la tour.

11. Le procédé selon la revendication 9 ou 10, comprenant en outre :
lorsqu'il est déterminé qu'il existe un risque de balayage de la tour, commande (S14) de l'éolienne pour effectuer une opération d'arrêt.

12. Une éolienne (100), comprenant : une tour (101) ; une nacelle (102) installée au sommet de la tour (101) ; un moyeu (103) installé à l'extrémité de la nacelle (102) ; et une pluralité de pales (104) installées sur le moyeu (103),
**caractérisée en ce que** l'éolienne (100) comprend en outre l'appareil (200) de surveillance de l'espacement de la pale de l'éolienne selon l'une quelconque des revendications 1 à 8.
